# EUROPEAN PATENT SPECIFICATION

(11) **EP 2 367 014 B1**
(45) Date of publication and mention of the grant of the patent: **14.10.2020**
(21) Application number: 11158796.0
(22) Date of filing: 18.03.2011
(51) Int. Cl.: G01N 35/04, G01N 35/00, G06K 7/10

(54) **Sample analyzer and reagent information obtaining method**
Probenanalysegerät und Verfahren zum Erhalten von Reagenzinformationen
Analyseur d'échantillons et procédé pour obtenir des informations sur les réactifs

(30) Priority: 18.03.2010 JP 2010062097; 24.03.2010 JP 2010068422; 25.03.2010 JP 2010069186
(43) Date of publication of application: 21.09.2011
(73) Proprietor: Sysmex Corporation, Kobe-shi, Hyogo 651-0073 (JP)
(72) Inventor: Tokunaga, Kazutoshi, Hyogo 651-0073 (JP)
(74) Representative: Hoffmann Eitle

(56) References cited:
- JP-A- 2009 210 444
- US-A- 5 500 651
- US-A1- 2004 207 564
- JUN-BONG EOM ET AL: "An Efficient Reader Anticollision Algorithm in Dense RFID Networks With Mobile RFID Readers", IEEE TRANSACTIONS ON INDUSTRIAL ELECTRONICS, IEEE SERVICE CENTER, PISCATAWAY, NJ, USA, vol. 56, no. 7, 1 July 2009 (2009-07-01), pages 2326-2336, XP011257425, ISSN: 0278-0046

## Description

### FIELD OF THE INVENTION

The present invention relates to a sample analyzer, in particular, to a sample analyzer mounting a reagent container including an electronic tag on which reagent information is recorded.

### BACKGROUND

A sample analyzer mounting a reagent container including an electronic tag on which reagent information is recorded is conventionally known.

Japanese Patent Publication No. 2009/210444 discloses an automatic analyzer including: a reagent container holder of circular ring shape for holding a plurality of reagent containers including a wireless IC tag, on which reagent information is recorded, in two columns of an inner circumferential column and an outer circumferential column; an inner circumferential side antenna for emitting a radio wave to the wireless IC tag of the reagent container held in the reagent container holder of the inner circumferential column; an outer circumferential side antenna for emitting a radio wave to the wireless IC tag of the reagent container held in the reagent container holder of the outer circumferential column; and an information reading/recording unit for receiving the radio wave returned from the wireless IC tag from the inner circumferential side antenna and the outer circumferential side antenna. In the automatic analyzer, the inner circumferential side antenna is arranged on the inner side of the reagent container holder of the inner circumferential column, and the outer circumferential side antenna is arranged on the outer side of the reagent container holder of the outer circumferential column.

However, in the automatic analyzer described in Japanese Patent Publication No. 2009/210444, antennas need to be arranged at the inner side of the reagent container holder of the inner circumferential column and the outer side of the reagent container holder of the outer circumferential column. Thus, there is a problem that the number of components increases. Furthermore, there is also a problem that the device main body enlarges since the region on the inner side of the reagent container holder of the inner circumferential column and the region on the outer side of the reagent container holder of the outer circumferential column need to be ensured to arrange the antennas.

Further background is disclosed in the following documents.

JP 2009 210444 A, on which the two-part form of Claim 1 is based, discloses an autoanalyzer capable of accurately reading data even in an autoanalyzer equipped with a means for performing the discrimination treatment of a reagent using a radio IC tag.

The article titled "An Efficient Reader Anticollision Algorithm in Dense RFID Networks With Mobile RFID Readers" by Jun-Bong Eom et al., IEEE Transactions On Industrial Electronics, Vol. 56, No. 7, July 2009, pages 2326 to 2336, discloses an efficient reader anticollision algorithm using a polling server in dense and dynamic RFID networks with mobile readers. Owing to the assistance of the server, the readers can rapidly decide whether they can work or not without interfering neighbors and can be easily synchronized. The described algorithm is simple and makes readers aware of neighbors to minimize reader collisions. Performance evaluation shows how many readers can operate in a network and indicates that the algorithm is more efficient than distributed color selection, colorwave, and hierarchical Q-learning algorithm, particularly in dense and mobile environments.

US 5,500,651 discloses a system and method for communicating between an identification reader and a transponder unit. A first interrogation signal is transmitted from the reader, this first interrogation signal having a first read range. A first response signal is then received at the reader after which a second interrogation signal is transmitted from the reader. The second interrogation signal has a second read range which is different than said first read range. The read range can be varied by varying either the amplitude or duration of the power level of the interrogation signal. A second response signal is then received at the reader. These consecutive responses are then compared determine a correct response signal which can be displayed.

US 2004/0207564 A1 discloses a shielding device for an antenna board, and a liquid ejection apparatus incorporating the same.

### SUMMARY

The scope of the present invention is defined solely by the appended claims, and is not affected to any degree by the statements within this summary.

A sample analyzer according to an embodiment of the present invention defined by independent claim 1.

With such a configuration, since the antenna does not need to be individually arranged in the first reagent container holder and the second reagent container holder, the number of components can be suppressed from increasing by that much. Furthermore, only the region between the first reagent container holder and the second reagent container holder needs to be ensured to arrange the antenna by arranging the antenna between the first reagent container holder and the second reagent container holder, and hence two regions do not need to be ensured to arrange the antenna. The device main body can be suppressed from enlarging by that much. The second reagent container is not positioned between the first reagent container and the antenna and the first reagent container is not positioned between the second reagent container and the antenna as the antenna is arranged between the first reagent container holder and the second reagent container holder. Thus, the reading of the reagent information of the first electronic tag and the second electronic tag can be suppressed from being inhibited due to the second reagent container being positioned between the first reagent container and the antenna, and the first reagent container being positioned between the second reagent container and the antenna.

Preferably, the first electronic tag is attached to a side surface of the first reagent container facing the antenna; and the second electronic tag is attached to a side surface of the second reagent container facing the antenna.

The first electronic tag and the second electronic tag thus can be easily read by the antenna.

Preferably, the sample analyzer further comprises a controller configured to determine whether the antenna has received the radio wave from an electronic tag which is a target of reading a reagent information.

According to such a configuration, the radio wave from the electronic tag that is not the read target can be suppressed from being mistakenly used as the radio wave from the electronic tag of the read target.

Preferably, the first reagent information recorded on the first electronic tag contains a type specifying information for specifying a type of the first reagent, and the second reagent information recorded on the second electronic tag contains a type specifying information for specifying a type of the second reagent; and the controller determines whether the antenna has received the radio wave from the electronic tag which is the target of reading the reagent information, based on a type specifying information contained in the reagent information obtained by the reagent information obtainer unit.

With such a configuration, the radio wave from the electronic tag that is not the read target can be more suppressed from being mistakenly used as the radio wave from the electronic tag of the read target by using the type specifying information.

Preferably, the antenna is configured to write a reagent information to each of the first and second electronic tags by emitting a write radio wave to each of the first and second electronic tags; and the sample analyzer further comprises a controller configured to determine whether the antenna and an electronic tag which is a target of writing a reagent information are communicable before the antenna emits the write radio wave to the electronic tag which is the target of writing the reagent information.

With such a configuration, the control unit can determined in advance whether or not communicable with the electronic tag of the write target before writing the reagent information to the electronic tag of the write target. The reagent information thus can be more reliably written to the first electronic tag and the second electronic tag of the write target.

Preferably, the antenna comprises an antenna substrate having a flat plate shape, with a first surface and a second surface of the antenna substrate are positioned on the first reagent container side and the second reagent container side, respectively; and the sample analyzer further comprises: a drive unit configured to move at least one of the reagent container holders and the antenna; and a controller configured to control the drive unit to position the first electronic tag at a position facing the first surface of the antenna substrate when the first electronic tag is a target of reading a reagent information, and control the drive unit to position the second electronic tag at a position facing the second surface of the antenna substrate when the second electronic tag is a target of reading a reagent information.

With such a configuration, the first electronic tag and the second electronic tag of the read target can be more easily read by the antenna since the first electronic tag and the second electronic tag of the read target can be positioned at the position facing one surface and the position facing the other surface, respectively, of the antenna substrate by the control unit.

Preferably, the first reagent container holder holds a plurality of first reagent containers, and is formed to a substantially circular shape in plan view; the second reagent container holder holds a plurality of second reagent containers, and is formed to a substantially circular shape on an inner peripheral side of the first reagent container holder in plan view; and a readable range by the antenna when reading the second electronic tag is smaller than a readable range by the antenna when reading the first electronic tag.

With such a configuration, the length of the outer periphery of the second reagent container holder formed to a substantially circular ring shape on the inner the side of the first reagent container holder is smaller than the length of the inner periphery of the first reagent container holder of a substantially circular ring shape, and hence a plurality of second reagent containers can be easily arranged in a state proximate to each other than the plurality of first reagent containers. With the readable range when reading the second electronic tag smaller than the readable range when reading the first electronic tag, the reading of the reagent information from the first electronic tag can be suppressed from failing and the reagent information of another second electronic tag different from the second electronic tag of read target can be suppressed from being mistakenly read.

Preferably, the sample analyzer further comprises a read limiting member, arranged between the second electronic tag and the antenna, for limiting the readable range by the antenna.

With such a configuration, the reagent information of another second electronic tag different from the second electronic tag of the read target can be easily suppressed from being mistakenly read when reading the reagent information from the second electronic tag provided to the second reagent containers proximate to each other.

Preferably, the read limiting member includes a metal member with a gap for passing the radio wave from each of the first and second electronic tags.

Preferably, a read limiting member for limiting a readable range by the antenna is not arranged between the first electronic tag and the antenna.

With such a configuration, a read limiting member for limiting the readable range by the antenna is arranged between the second electronic tag and the antenna, and is not arranged between the first electronic tag and the antenna, and thus the readable range when reading the second electronic tag can be easily made smaller than the readable range when reading the first electronic tag.

Preferably, the antenna is configured to emit a radio wave to each of the first and second electronic tags, and to receive a radio wave emitted from each of the first and second electronic tags in response to the radio wave; and the sample analyzer further comprises a controller configured to control the antenna to emit a radio wave of a first reaching range to the first electronic tag when reading the reagent information from the first electronic tag, and emit a radio wave of a second reaching range smaller than the first reaching range when reaching the reagent information from the second electronic tag.

With such a configuration, the readable range when reading the second electronic tag can be easily made smaller than the readable range when reading the first electronic tag by the control unit.

Preferably, the first reagent container holder is configured to hold a predetermined number of first reagent containers at equal intervals; and the second reagent container holder is configured to hold a predetermined number of second reagent containers at equal intervals.

According to such a configuration, the readable range when reading the second electronic tag is made smaller than the readable range when reading the first electronic tag with the plurality of second reagent containers arranged in a state proximate to each other than the plurality of first reagent containers, so that the reading of the reagent information from the first electronic tag can be more suppressed from failing and the reagent information of another second electronic tag different from the second electronic tag of read target can be more suppressed from being mistakenly read.

Preferably, the antenna is fixed at a predetermined position between the first reagent container holder and the second reagent container holder; and the sample analyzer further comprises: a drive unit configured to rotationally drive the first and second reagent container holders in a peripheral direction; and a controller configured to control the drive unit to move a first electronic tag to a position facing the antenna when the first electronic tag is a target of reading a reagent information, and to move a second electronic tag to a position facing the antenna when the second electronic tag is a target of reading a reagent information.

A method for obtaining reagent information of a reagent in a reagent container according to an embodiment of the present invention is defined by independent claim 14.

With such a configuration, since the antenna does not need to be individually arranged in the first reagent container holder and the second reagent container holder, the number of components can be suppressed from increasing by that much. Furthermore, only the region between the first reagent container holder and the second reagent container holder needs to be ensured to arrange the antenna by arranging the antenna between the first reagent container holder and the second reagent container holder, and hence two regions do not need to be ensured to arrange the antenna. The device main body can be suppressed from enlarging by that much. The second reagent container is not positioned between the first reagent container and the antenna and the first reagent container is not positioned between the second reagent container and the antenna as the antenna is arranged between the first reagent container holder and the second reagent container holder. Thus, the reading of the reagent information of the first electronic tag and the second electronic tag can be suppressed from being inhibited due to the second reagent container being positioned between the first reagent container and the antenna, and the first reagent container being positioned between the second reagent container and the antenna.

Preferably, the method further comprises determining whether the antenna has received the radio wave from the electronic tag which is the target of reading the reagent information.

### BRIEF DESCRIPTION OF THE DRAWINGS

Fig. 1 is a perspective view showing an overall configuration of a sample analyzer according to one embodiment of the present invention;
Fig. 2 is a plan view showing the overall configuration of the sample analyzer according to one embodiment shown in Fig. 1;
Fig. 3 is a block diagram for describing the configuration of the sample analyzer according to one embodiment shown in Fig. 1;
Fig. 4 is a perspective view showing the interior of the reagent installing unit of the sample analyzer according to one embodiment shown in Fig. 1;
Fig. 5 is a plan view showing the interior of the reagent installing unit of the sample analyzer according to one embodiment shown in Fig. 1;
Fig. 6 is an enlarged plan view showing a state of reading an IC tag of a reagent container of the reagent installing unit according to one embodiment shown in Fig. 1;
Fig. 7 is a perspective view showing an antenna of the reagent installing unit according to one embodiment shown in Fig. 1;
Fig. 8 is a front view showing the antenna of the reagent installing unit according to one embodiment shown in Fig. 1;
Fig. 9 is a plan view showing an antenna substrate of the antenna according to one embodiment shown in Fig. 1;
Fig. 10 is a side view showing an R1 reagent container of the reagent installing unit according to one embodiment shown in Fig. 1;
Fig. 11 is a side view showing an R2 reagent container of the reagent installing unit according to one embodiment shown in Fig. 1;
Fig. 12 is a conceptual diagram showing the unique information and the reagent information stored in the IC tag according to one embodiment shown in Fig. 1;
Fig. 13 is a flowchart showing the measurement operation of the sample analyzer according to one embodiment shown in Fig. 1;
Fig. 14 is a flowchart showing a reagent information reading process of the sample analyzer according to one embodiment shown in Fig. 1; and
Fig. 15 is a flowchart showing a reagent aspirating / reagent information writing process of the sample analyzer according to one embodiment shown in Fig. 1.

### DETAILED DESCRIPTION OF THE EMBODIMENT

The embodiments embodying the present invention will be described based on the drawings.

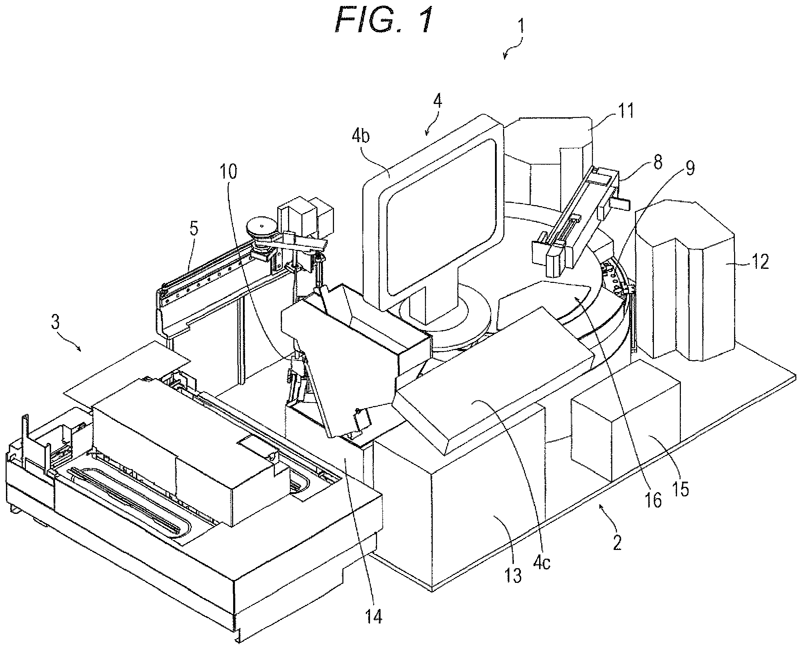

The configuration of an immune sample analyzer 1 according to a first embodiment of the present invention will be now described with reference to Figs. 1 to 15.

A sample analyzer 1 according to a first embodiment of the present invention is an apparatus for carrying out examinations on various items, such as a protein related to an infectious disease (e.g., hepatitis B, hepatitis C, etc.), a tumor marker, and a thyroid hormone using samples such as blood.

The sample analyzer 1 is an apparatus for quantitatively measuring or qualitatively measuring, e.g., antigens, antibodies and the like contained in a sample (blood specimen) such as blood, which is the measurement target. When quantitatively measuring the antigen contained in the sample, the sample analyzer 1 is configured to bond magnetic particles (R2 reagent) to a capture antibody (R1 reagent) bonded to an antigen contained in the sample, and thereafter, attracting the bound antigen, capture antibody, and the magnetic particles to a magnet (not shown) of a primary BF (Bound Free) separator 11 to remove the R1 reagent containing non-reactive (free) capture antibody. The sample analyzer 1 then bonds the antigen bound with the magnetic particles and the labeled antibody (R3 reagent), and thereafter, attracts the bound magnetic particles, the antigen, and the labeled antibody to a magnet (not shown) of a secondary BF separator 12 to remove the R3 reagent containing non-reactive (free) labeled antibody. The dispersion liquid (R4 reagent) and the light emitting substrate (R5 reagent) that emits light in the reaction process with the labeled antibody are added, and a light emitting amount generated through the reaction of the labeled antibody and the light emitting substrate is measured. The antigen contained in the sample that bonds with the labeled antibody is quantitatively measured through such processes.

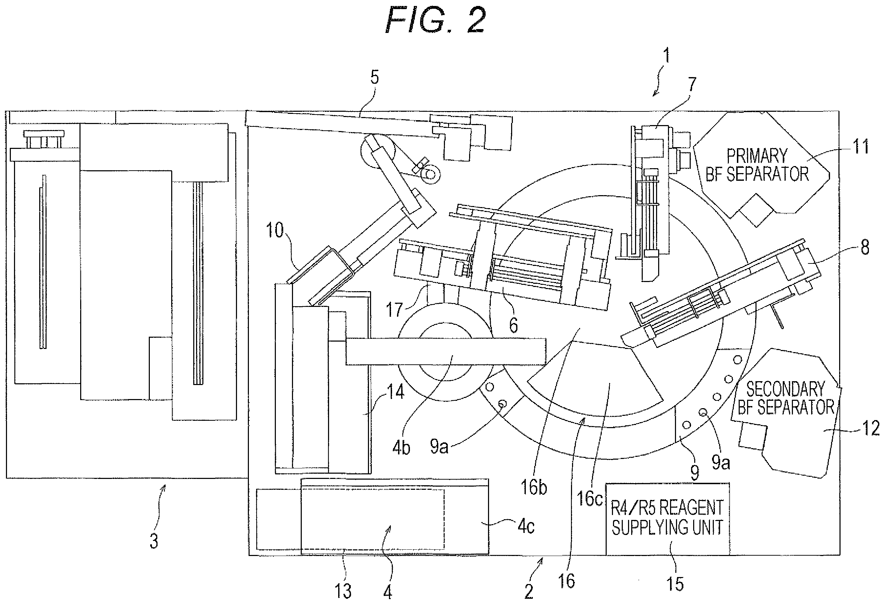

As shown in Figs. 1 and 2, the sample analyzer 1 includes a measurement mechanism section 2, a sample transport section (sampler) 3 arranged adjacent to the measurement mechanism section 2, and a control device 4 including a PC (personal computer) electrically connected to the measurement mechanism section 2.

The sample transport section 3 is configured to transport a rack mounted with a plurality of test tubes (not shown) containing the samples. The sample transport section 3 is configured to transport the test tube containing the sample up to a sample aspirating position by means of a sample dispensing arm 5.

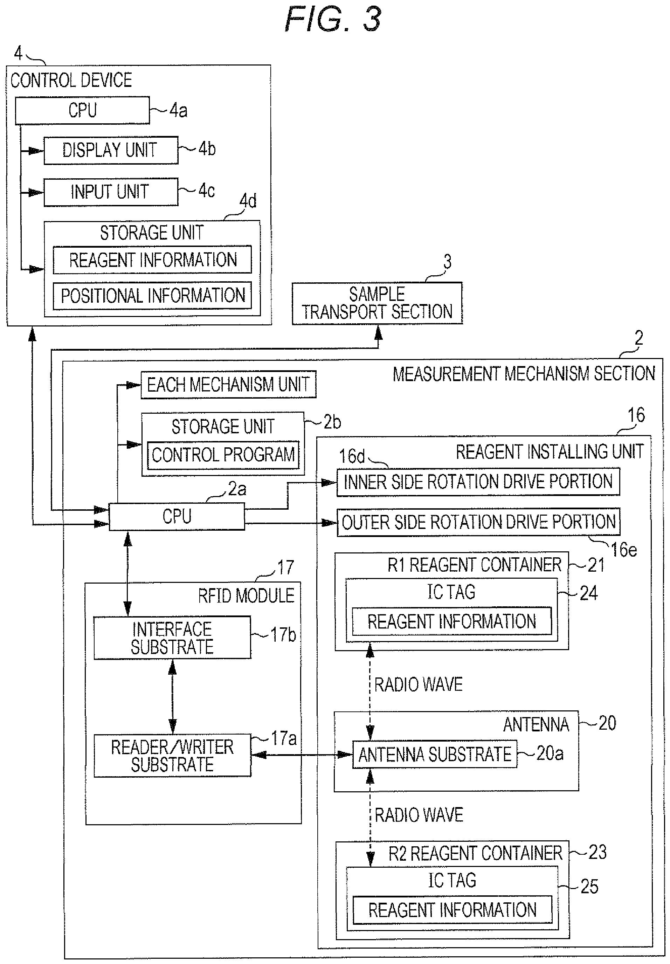

As shown in Fig. 3, the control device 4 includes a CPU 4a, a display unit 4b, an input unit 4c, and a storage unit 4d. The CPU 4a causes the measurement mechanism section 2 (hereinafter described as CPU 2a) to carry out the measurement based on the measurement condition and the like input by the user using the input unit 4c, and analyzing the measurement result obtained by the measurement mechanism 2 and displaying the analysis result on the display unit 4b. The storage unit 4d includes a hard disc, and individually stores the reagent information and the positional information of a R1 reagent container 21, a R3 reagent container 22, and a R2 reagent container 23, to be described later. The storage unit 4d is described in detail.

As shown in Fig. 2, the measurement mechanism section 2 is configured by a sample dispensing arm 5, an R1 reagent dispensing arm 6, a R2 reagent dispensing arm 7, a R3 reagent dispensing arm 8, a reaction unit 9, a cuvette supplying unit 10, the primary BF separator 11, the secondary BF separator 12, a pipette tip supplying unit 13, a detection unit 14, a R4/R5 reagent supplying unit 15, a reagent installing unit 16, and an RFID (Radio Frequency IDentification) module 17.

As shown in Fig. 3, each mechanism (various dispensing arms, reaction unit 9, and the like) in the measurement mechanism section 2 is controlled by the CPU 2a arranged in the measurement mechanism section 2. The sample transport section 3 is also configured to be controlled by the CPU 2a. Furthermore, the measurement mechanism section 2 includes the storage unit 2b, where a control program for causing the CPU 2a to execute the operation control of each mechanism of the measurement mechanism section 2 is stored in the storage unit 2b.

As shown in Fig. 2, the cuvette supplying unit 10 is configured to accommodate a plurality of cuvettes (not shown), and sequentially supplies cuvettes to the sample aspirating position one by one by means of the sample dispensing arm 5.

The R1 reagent dispensing arm 6 is configured to aspirate the R1 reagent installed at the reagent installing unit 16, and dispense (discharge) the aspirated R1 reagent into the cuvette mounted at the sample discharging position. The R1 reagent dispensing arm 6 transfers the cuvette mounted at the sample discharging position to the reaction unit 9 with a catcher (not shown).

The pipette tip supplying unit 13 transports a plurality of inserted pipette tips (not shown) to the tip attachment position one by one by means of the sample dispensing arm 5. The pipette tip is attached to the distal end of the pipette of the sample dispensing arm 5.

The sample dispensing arm 5 attaches the pipette tip at the tip attachment position, and then aspirating the sample in the test tube transported to the sample aspirating position by the sample transport section 3, and dispensing (discharging) the sample to the cuvette at the sample discharging position dispensed with the R1 reagent by the R1 reagent dispensing arm 6.

The R2 reagent dispensing arm 7 aspirates the R2 reagent installed at the reagent installing unit 16. The R2 reagent dispensing arm 7 is configured to dispense (discharge) the aspirated R2 reagent into the cuvette containing the R1 reagent and the sample.

The reaction unit 9 is formed to a substantially circular ring shape so as to surround the periphery of the reagent installing unit 16 having a substantially circular shape in plan view. The reaction unit 9 is configured to rotate in a clockwise direction, and moves the cuvette held in the cuvette holding portion 9a to each processing position where various processes (dispensing of reagent, and the like) are performed.

The primary BF separator 11 is configured to separate (B/F separation) the non-reacting R1 reagent (unnecessary component) and the magnetic particles from the specimen in the cuvette after transferring the cuvette containing the sample, the R1 reagent, and the R2 reagent from the reaction unit 9 to the primary BF separator 11 with a catcher (not shown).

The R3 reagent dispensing arm 8 has a function of aspirating the R3 reagent installed at the reagent installing unit 16. The R3 reagent dispensing arm 8 is configured to dispense (discharge) the aspirated R3 reagent into the cuvette when the cuvette accommodating the specimen after the B/F separation by the primary BF separator 11 is transferred from the primary BF separator 11 to the reaction unit 9.

The secondary BF separator 12 is configured to separate the non-reacting R3 reagent (unnecessary component) and the magnetic particles from the specimen in the cuvette after transferring the cuvette containing the specimen after the B/F separation by the primary BF separator 11 and the R3 reagent from the reaction unit 9 to the secondary BF separator 12 with a catcher (not shown).

The R4/R5 reagent supplying unit 15 is configured to dispense the R4 reagent and the R5 reagent, in order, to the cuvette containing the specimen after the B/F separation by the secondary BF separator 12 with a tube (not shown).

The detector 14 is arranged to measure the amount of antigen contained in a sample by obtaining the light generated in the reaction process of the labeled antibody bound to the antigen of the sample performed with a predetermined process and the light emitting substrate with a photo multiplier tube.

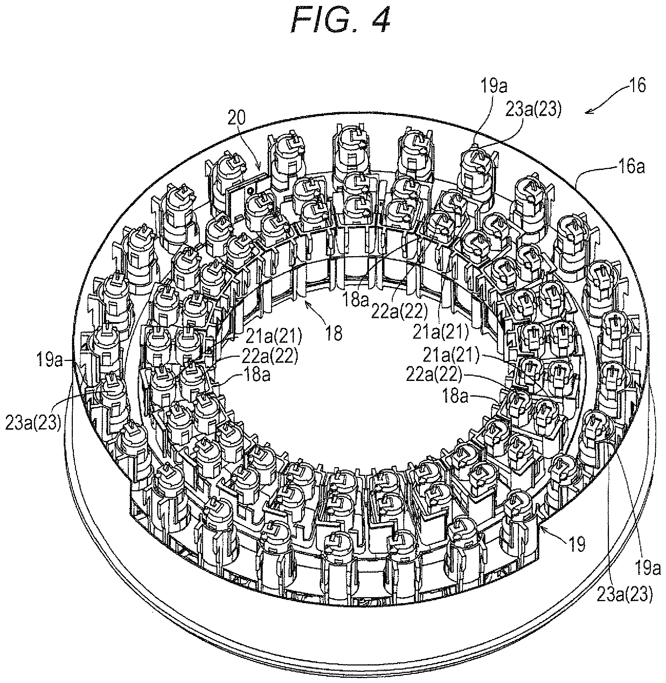

As shown in Fig. 2, the reagent installing unit 16 includes a housing 16a (see Fig. 4) having a substantially cylindrical shape, a lid 16b arranged to cover the housing 16a from the upper side, and an open/close portion 16c which is arranged at the lid 16b and which is opened and closed when the user changes the R1 reagent container 21, the R3 reagent container 22, and the R2 reagent container 23, to be described later. An openable/closable window (not shown) is formed at the upper surface of the lid 16b corresponding to the position where the R1 reagent, the R2 reagent, and the R3 reagent are aspirated. The R1 reagent, the R2 reagent, and the R3 reagent are aspirated by the R1 reagent dispensing arm 6, the R2 reagent dispensing arm 7, and the R3 reagent dispensing arm 8, respectively, through the window.

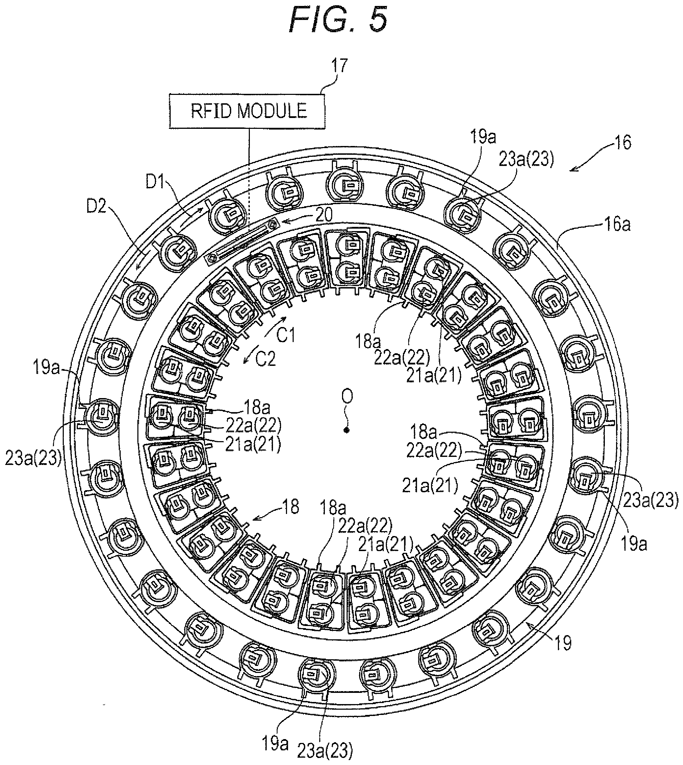

In a first embodiment, the R1/R3 installing portion 18, an R2 installing portion 19, and one antenna 20 are arranged inside the housing 16a of the dispensing installing unit 16, as shown in Fig. 4 and Fig. 5. Specifically, as shown in Fig. 4 to Fig. 6, the R1/R3 installing portion 18 and the R2 installing portion 19 are formed to a substantially circular ring shape with the center O substantially the same as the center O of the housing 16a when seen in plan view. The R1/R3 installing portion 18 is arranged on the inner peripheral side (center O side in Fig. 5) of the R2 installing portion 19, and the antenna 20 is arranged on the outer peripheral side (opposite side of center O) of the R1/R3 installing portion 18 and on the inner peripheral side of the R2 installing portion 19. In other words, the antenna 20 is arranged so as to be sandwiched by the R1/R3 installing portion 18 and the R2 installing portion 19 in plan view.

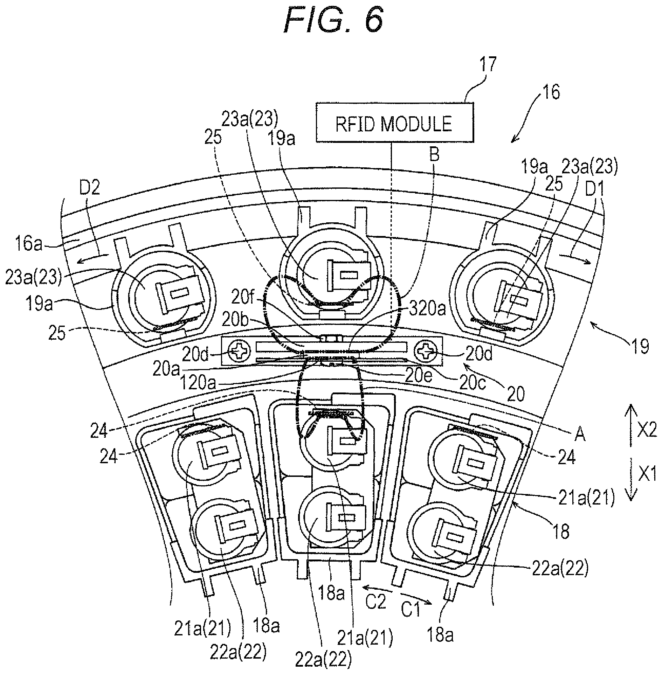

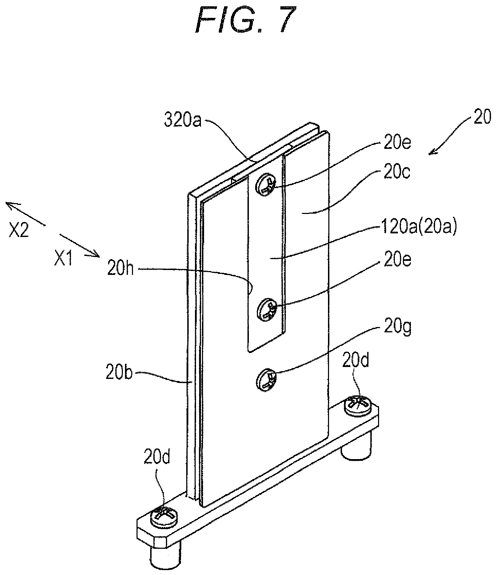

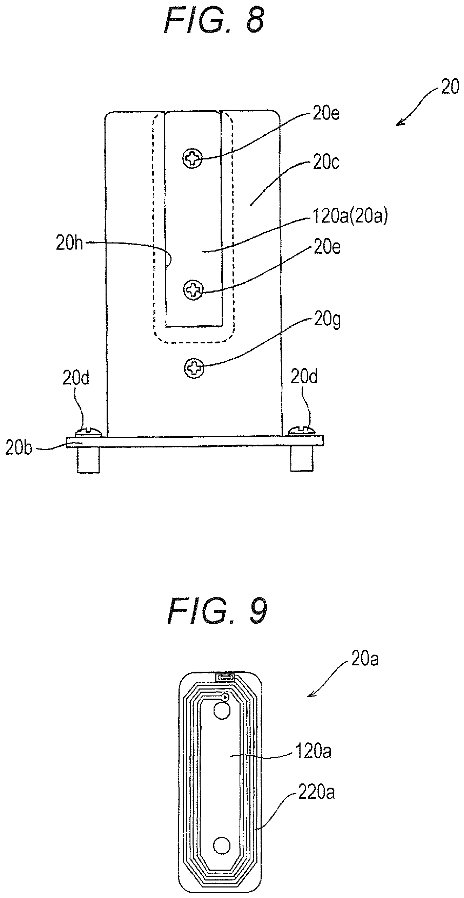

As shown in Fig. 7 and Fig. 8, the antenna 20 includes an antenna substrate 20a, a substrate attachment portion 20b for fixing the antenna substrate 20a from the outer side (direction of arrow X2, see Fig. 6), and a metal plate 20c, arranged on the inner side of the antenna 20 (direction of arrow X1, see Fig. 6), to be attached to the substrate attachment portion 20b so as to sandwich the antenna substrate 20a with the substrate attachment portion 20b. As shown in Fig. 6, the lower part of the substrate attachment portion 20b is fixed to the bottom surface of the housing 16a with a screw 20d. In other words, the antenna 20 is fixed to the housing 16a.

As shown in Fig. 9, the antenna substrate 20a is configured by forming a coil-like antenna wiring 220a on the surface 120a (see Fig. 7) on the direction of the arrow X1 of the flat plate shaped substrate. The radio wave can be transmitted and received through the coil-like antenna wiring 220a. As shown in Fig. 6, the antenna substrate 20a is arranged inside the substrate attachment portion 20b so that the surface 120a on the side of the direction of the arrow X1 of the antenna substrate 20a faces the center O (see Fig. 5) of the housing 16a.

In the first embodiment, the antenna substrate 20a is configured to emit the read radio wave and the write radio wave from the surface 120a on the side of the direction of the arrow X1 towards the inner side (center O side of Fig. 5 (side of the direction of the arrow X1)) of the reagent installing unit 1 6, and is configured to emit the read radio wave and the write radio wave from the surface 320a on the side of the direction of the arrow X2 towards the outer side (R2 installing portion 19 side (side of the direction of the arrow X2)). The antenna substrate 20a is configured to be able to receive the response radio wave emitted from the IC tags 24 and 25 in response to the read radio wave. The antenna 20 is configured to be able to perform read and write with respect to the IC tag 24 of the R1 reagent container 21 arranged on the side in the direction of the arrow X1, and is configured to be able to perform read and write with respect to the IC tag 25 of the R2 reagent container 23 arranged on the side in the direction of the arrow X2. The antenna substrate 20a is connected to a reader/writer substrate 17a, described below, of the RFID module 17.

The substrate attachment portion 20b is made of resin capable of transmitting radio wave. Thus, the read radio wave and the write radio wave emitted from the surface 320a on the side in the direction of the arrow X2 of the antenna substrate 20a towards the outer side (side in the direction of the arrow X2) transmit through the substrate attachment portion 20b and reach the R2 installing portion 19, and the response radio wave emitted from the IC tag 25 transmits through the substrate attachment portion 20b and reach the antenna substrate 20a. As shown in Fig. 7, the antenna substrate 20a is fixed to the substrate attachment portion 20b with a screw 20e and a nut 20f (see Fig. 6).

The metal plate 20c is made of aluminum plate material capable of absorbing radio waves (read radio wave, write radio wave, and response radio wave). The metal plate 20c is fixed to the substrate attachment portion 20b with a screw 20g and a nut (not shown) so as to be arranged on the side in the direction of the arrow X1 of the antenna 20 while sandwiching the antenna substrate 20a with the substrate attachment portion 20b.

The metal plate 20c includes a substantially U-shaped cutout 20h. The antenna substrate 20a is configured to emit radio wave towards the inner side (side in the direction of arrow X1) of the reagent installing unit 16 through the cutout 20h, where the radio wave of the antenna substrate 20a that does not pass through the cutout 20h is absorbed by the metal plate 20c. In other words, the metal plate 20c limits the reading range and the writing range on the side in the direction of the arrow X1 of the antenna 20 (antenna substrate 20a) by limiting the range A (thick chain dashed line shown in Fig. 6) of the read radio wave and the write radio wave emitted from the antenna substrate 20a towards the side in the direction of the arrow X2 and the range of the response radio wave the antenna substrate 20a receives from the side in the direction of the arrow X1.

The metal plate is not arranged on the side in the direction of the arrow X2 of the antenna 20. Thus, the range (range B shown in Fig. 6 (thick double dashed line)) of the read radio wave and the write radio wave emitted from the antenna substrate 20a towards the side in the direction of the arrow X2 and the range of the response radio wave the antenna substrate 20a receives from the side in the direction of the arrow X2 are not limited. As a result, the range B (thick double dashed line) of the read radio wave and the write radio wave emitted from the antenna substrate 20a towards the side in the direction of the arrow X2 is configured to become greater than the range A (thick chain dashed line) of the read radio wave and the write radio wave emitted from the antenna substrate 20a towards the side in the direction of the arrow X1.

The reagent installing unit 16 includes an inner side rotation drive portion 16c (see Fig. 3) for rotating the R1/R3 installing portion 18 in the direction of an arrow C1 and in the direction of an arrow C2 with the center O as the center of rotation, and an outer side rotation drive portion 16d (see Fig. 3) for rotating the R2 installing portion 19 in the direction of the arrow D1 and the direction of the arrow D2 with the center O as the center of rotation. The inner side rotation drive portion 16c and the outer side rotation drive portion 16d are configured so that the drive is individually controlled by the CPU 2a.

As shown in Fig. 5, the R1/R3 installing portion 18 includes twenty-five R1/R3 holding members 18a, which are made of resin capable of transmitting the radio wave, arranged at an equal angle (about 14.4 degrees). Each R1/R3 holding member 18a holds the R1 reagent container 21 for accommodating the R1 reagent containing the capture antibody, and the R3 reagent container 22 for accommodating the R3 reagent containing the labeled body. The R1/R3 holding member 18a is configured such that the R1 reagent container 21 is held on the outer side (R2 installing portion 19 side) and the R3 reagent container 22 is held on the inner side (center O side).

The R2 installing portion 19 includes twenty-five R2 holding members 19a, which are made of resin capable of transmitting the radio wave, arranged at an equal angle (about 14.4 degrees). Each R2 holding member 19a holds the R2 reagent container 23 for accommodating the R2 reagent containing the magnetic particles.

The R1/R3 installing portion 18 is arranged on the inner peripheral side of the R2 installing portion 19, and the R1 reagent containers 21 and the R2 reagent containers 23 are arranged in the same number (twenty-five), and thus the interval between the R1 reagent containers 21 is smaller than the interval between the R2 reagent containers 23. In other words, the R1 reagent containers 21 are arranged closer to each other than the R2 reagent containers 23. The R1 reagent containers 21, the R3 reagent containers 22, and the R2 reagent containers 23 are configured to be installed and changed by the user.

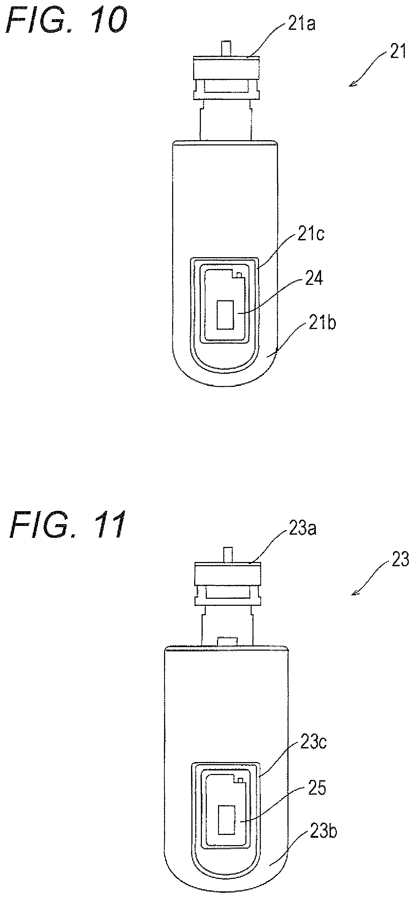

As shown in Fig. 10, the R1 reagent container 21 is formed with a lid 21a that opens and closes when aspirating the R1 reagent, and a reagent accommodating portion 21b for accommodating the R1 reagent. As shown in Fig. 11, the R2 reagent container 23 is formed with a lid 23a that opens and closes when aspirating the R2 reagent, and a reagent accommodating portion 23b for accommodating the R2 reagent. As shown in Fig. 6, the R3 reagent container 22 and the R1 reagent container 21 have substantially a similar shape, and the R3 reagent container 22 is formed with a lid 22a that opens and closes when aspirating the R3 reagent, and a reagent accommodating portion (not shown) for accommodating the R3 reagent. The lids 21a and 22a are configured to open and close with the rotation of the R1/R3 installing portion 18, and the lid 23a is configured to open and close with the rotation of the R2 installing portion 19.

In the first embodiment, as shown in Fig. 10, an IC tag attachment portion 21c, to where the IC tag 24 is to be attached, is formed on the side surface arranged on the outer side (direction of arrow X2 in Fig. 6) of the reagent accommodating portion 21b of the R1 reagent container 21. In other words, the IC tag 24 of the R1 reagent container 21 is attached to the side surface in the direction of the arrow X2 of the reagent accommodating portion 21b so as to face the outer side (direction of the arrow X2) of the reagent installing unit 16 and to face the front surface position of the surface 120a in the direction of the arrow X1 of the antenna substrate 20a when arranged in the R1/R3 installing portion 18, as shown in Fig. 6.

As shown in Fig. 11, an IC tag attachment portion 23c, where the IC tag 25 is to be attached, is formed on the side surface arranged on the inner side (direction of arrow X1 in Fig. 6) of the reagent accommodating portion 23b of the R2 reagent container 23. In other words, the IC tag 25 of the R2 reagent container 23 is attached to the side surface in the direction of the arrow X1 of the reagent accommodating portion 23b so as to face the inner side (direction of the arrow X1) of the reagent installing unit 16 and to face the front surface position of the surface 320a in the direction of the arrow X2 of the antenna substrate 20a when arranged in the R2 installing portion 19, as shown in Fig. 6. An IC tag is not attached to the side surface of the R3 reagent container 22, as opposed to the R1 reagent container 21.

The IC tag 24 records the reagent information of the R1 reagent of the R1 reagent container 21, and the reagent information of the R3 reagent of the R3 reagent container 22 held in the R1/R3 holding member 18a common with the R1 reagent container 21. The IC tag 25 records the reagent information of the R2 reagent of the R2 reagent container 23.

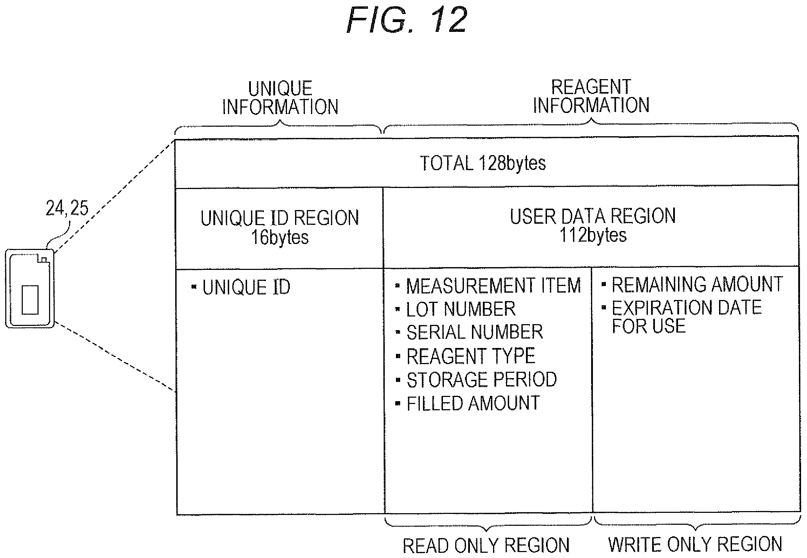

As shown in Fig. 12, the IC tags 24 and 25 are configured to be able to store 128 bytes of information. Among the storage capacity of 128 bytes, 16 bytes are assigned for the unique ID region indicating the unique information, and 112 bytes are assigned for the user data region indicating the reagent information. The unique ID region is the region where the unique ID for individually identifying the IC tags 24 and 25 is recorded, and only read can be carried out. The user data region is the region where the user can freely write information. The user data region is set with a region (read only region) where only read is carried out and write is not carried out, and a region (writeable region) where both read and write are carried out.

The unique ID is used when the CPU 2a encrypts the reagent information. Thus, the reagent information cannot be decrypted if the unique ID is different even if the reagent information is duplicated to a different IC tag, and hence the reagent information and the reagent of the reagent container are suppressed from being wrongly communicated.

The measurement item, the lot number, the serial number, the reagent type (type specifying information), the storage period, and the filled amount regarding the reagent container (R1 reagent container 21 or R2 reagent container 23) given the IC tag (IC tag 24 or 25) are recorded in the read only region, and the remaining amount and the expiration date for use are written in the writable region. The IC tag 24 also records the information regarding the R3 reagent container 22. The information is not written to the writable region of the IC tag 24 attached to the R1 reagent container 21 installed in the R1/R3 installing portion 18 for the first time, and the IC 25 attached to the R2 reagent container 23 installed in the R2 installing portion 19 for the first time.

The measurement item shows the measurement item performed with the reagent accommodated in the reagent container attached with the IC tag. The reagent type shows whether the reagent container attached with the IC tag is the R1 reagent container 21 or the R2 reagent container 23. The storage period shows the period the reagent can be stored. The filled amount shows the number of measurements that can be carried out with the reagent. The remaining amount shows the number of measurements that can be carried out with the reagent. The expiration date for use shows the date until the reagent can be used. The expiration date for use is set when the relevant reagent starts to be used.

In the first embodiment, the IC tags 24 and 25 are configured so that read and write are carried out at the front surface position (facing position) of the antenna 20, as shown in Fig. 6. In other words, the IC tag 24 of the R1 reagent container 21 is configured to be arranged at the position facing the surface 120a on the side in the direction of the arrow X1 of the antenna 20, and the IC tag 25 of the R2 reagent container 23 is configured to be arranged at the position facing the surface 320a on the side in the direction of the arrow X2 of the antenna 20.

The IC tags 24 and 25 are configured to emit the response radio wave containing the reagent information recorded in the IC tags 24 and 25 based on the read radio wave emitted from the antenna 20. The IC tags 24 and 25 are configured to rewrite the reagent information recorded in the IC tag to the new reagent information contained in the write radio wave based on the write radio wave emitted from the antenna 20. The reagent information is recorded in the IC tags 24 and 25 in the encrypted state.

As shown in Fig. 6, the IC tag 24 is configured so that read and write are carried out by the read radio wave and the write radio wave in the range A (thick chain dashed line) emitted from the antenna 20. The IC tag 25 is configured so that read and write are carried out by the read radio wave and the write radio wave in the range B (thick double dashed line) emitted from the antenna 20. The interval between the adjacent R1/R3 holding members 18a and the range A are set so that read and write are not carried out on the other IC tags 24 when read and write are carried out on a specific IC tag 24. The interval between the adjacent R2 holding members 19a and the range B are set so that read and write are not carried out on the other IC tags 25 when read and write are carried out on a specific IC tag 25.

As shown in Fig. 3, the respective reagent information of the twenty-five R1 reagent containers 21, the twenty-five R2 reagent containers 23, and the twenty-five R3 reagent containers 22 are individually stored in the storage unit 4d of the control device 4 apart from the IC tags 24 and 25. The storage unit 4d stores the respective initial position of the twenty-five R1 reagent containers 21, the twenty-five R3 reagent containers 22, and the twenty-five R2 reagent containers 23, and the rotation angle from the respective initial position of the R1/R3 installing portion 18 and the R2 installing portion 19 as positional information. The storage unit 4d thus stores the positional information and the reagent information of twenty-five R1 reagent containers 21, the twenty-five R3 reagent containers 22, and the twenty-five R2 reagent containers 23 in a corresponded state. The reagent information is stored in the storage unit 4d of the control device 4 in the decrypted state.

When the power supply (not shown) of the sample analyzer 1 is turned ON, the IC tags (IC tags 24 and 25) of all the reagent containers installed in the reagent installing unit 16 are read, and the positional information and the reagent information of each reagent container are obtained. If the reagent information is stored in the storage unit 4d, the CPU 4a of the control device 4 updates the reagent information stored in the storage unit 4d to the reagent information obtained from the IC tag when the power supply is turned ON. Thus, even if the R1 reagent container 21, the R3 reagent container 22, and the R2 reagent container 23 are changed to a new R1 reagent container 21, R3 reagent container 22, and R2 reagent container 23, respectively, while the power supply of the sample analyzer 1 is turned OFF, the reagent information stored in the storage unit 4d of the control device 4 can be updated to the information of the reagent currently installed at the reagent installing unit 16.

As shown in Fig. 2, the RFID module 17 is arranged exterior to the reagent installing unit 16, and includes a reader/writer substrate 17a, and an interface substrate 17b for intermediating the reader/writer substrate 17a and the CPU 2a, as shown in Fig. 3.

The reader/writer substrate 17a is configured to emit the read radio wave and the write radio wave having a frequency band of about 13.56 MHz from the antenna 20 based on an instruction from the CPU 2a. Furthermore, the reader/writer substrate 17a is configured to obtain the reagent information from the response radio wave emitted from the IC tags 24 and 25 in response to the read radio wave and received by the antenna 20, and to output the reagent information to the CPU 2a.

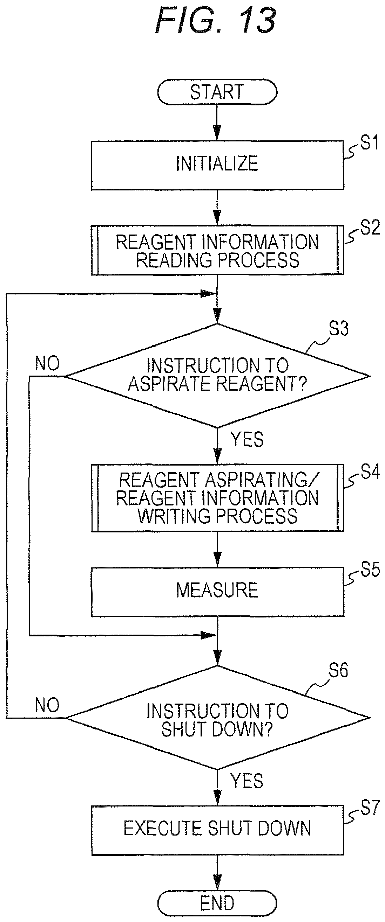

The measurement operation of the sample analyzer 1 (measurement mechanism section 2) according to a first embodiment of the present invention is now described with reference to Fig. 3 and Fig. 13.

First, when the power supply of the measurement mechanism section 2 is turned ON, the CPU 2a of the measurement mechanism section 2 initializes the program in step S1 and executes an initialization process such as operation check of each unit of the measurement mechanism section 2.

Thereafter, the reagent information reading process is performed in step S2. The reagent information reading process is described in detail below.

In step S3, whether a measurement instruction by the user is made is determined by the CPU 2a. The measurement instruction by the user is transmitted to the CPU 2a through the control device 4 (see Fig. 3). If it is determined that the measurement instruction by the user is not made, the process proceeds to step S6.

If it is determined that the measurement instruction by the user is made in step S3, the reagent aspirating/reagent information writing process is carried out by the CPU 2a in step S4. The reagent aspirating/reagent information writing process is described in detail below.

Subsequently, the sample is measured in step S5. In step S6, whether the instruction to shut down by the user is made is determined by the CPU 2a. The process returns to step S3 if it is determined that the instruction of shutdown is not made. If it is determined that the instruction of shutdown is made, the shutdown of the measurement mechanism section 2 is carried out by the CPU 2a in step S7. The measurement operation of the CPU 2a of the measurement mechanism section 2 is terminated in such a manner.

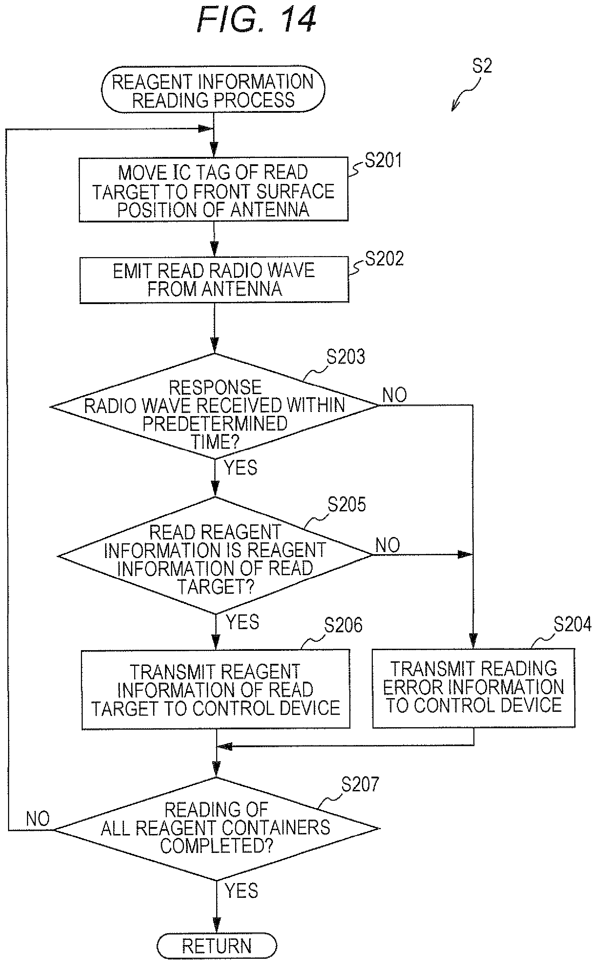

With reference to Fig. 6 and Fig. 14, the reagent information reading process of the sample analyzer 1 according to the first embodiment of the present invention shown in step S2 of Fig. 13 is described below in detail.

First, in step S201, the R1/R3 installing portion 18 (R2 installing portion 19) is rotated in the direction of the arrow C1 (D1) or the arrow C2 (D2) (see Fig. 6) so that the IC tag 24 (IC tag 25) of the read target is positioned at the position (front surface position) facing the surface 120a on the side in the direction of the arrow X1 (surface 320a on the side in the direction of the arrow X2) of the antenna 20 by the CPU 2a. In step S202, the antenna 20 emits the read radio wave to the IC tag 24 (IC tag 25) of the read target by the control of the CPU 2a and the reader/writer substrate 17a. In this case, the IC tag 25 (IC tag 24) that is not the read target may receive the read radio wave emitted from the antenna 20 and emit the response radio wave.

In step S203, whether the response radio wave emitted from the IC tag 24 (IC tag 25) in correspondence with the read radio wave is received by the antenna 20 within a predetermined time is determined by the CPU 2a. In other words, whether the reagent information obtained by the reader/writer substrate 17a of the RFID module 17 based on the response radio wave received from the antenna 20 is output to the CPU 2a within a predetermined time is determined by the CPU 2a. If it is determined that the antenna 20 did not receive the response radio wave within a predetermined time, determination is made that the reading failed, and the reading error information is transmitted to the control device 4 by the CPU 2a in step S204. A notification that reading of the reagent information of the reagent container positioned at the predetermined position (reagent information of the reagent container of read target) failed is displayed on the display unit 4b of the control device 4. The process then proceeds to step S207.

If it is determined that the antenna 20 received the response radio wave within the predetermined time in step S203, whether the reagent information contained in the response radio wave received by the antenna 20 is the reagent information of the read target is determined by the CPU 2a in step S205. In this case, the CPU 2a determines whether the reagent information of the read target based on the reagent type (type specifying information) obtained from the response radio wave. If it is determined that the reagent information contained in the response radio wave is not the reagent information of the read target, the process proceeds to step S204. The reagent information from the IC tag 25 (IC tag 24) that is not the read target is thus suppressed from being mistakenly used as the reagent information of the read target.

If it is determined that the reagent information contained in the response radio wave is the reagent information of the read target, the reagent information of the read target contained in the response radio wave is transmitted from the CPU 2a to the control device 4 in step S206. When the antenna 20 receives a plurality of response radio waves, and the reagent information of the read target exists in the plurality of response radio waves, only the reagent information of the read target is transmitted to the control device 4. In the control device 4, the reagent information of the storage unit 4d is updated based on the reagent information received from the CPU 2a. The process then proceeds to step S207.

Finally, in step S207, whether the reading of all twenty-five IC tags 24 and twenty-five IC tags 25 is completed is determined by the CPU 2a. If it is determined that the reading is not completed, the process returns to step S201 and the reading of a new IC tag is carried out. If it is determined that all the reading is completed, the reagent information reading process is terminated, and the process proceeds to step S3 shown in Fig. 13.

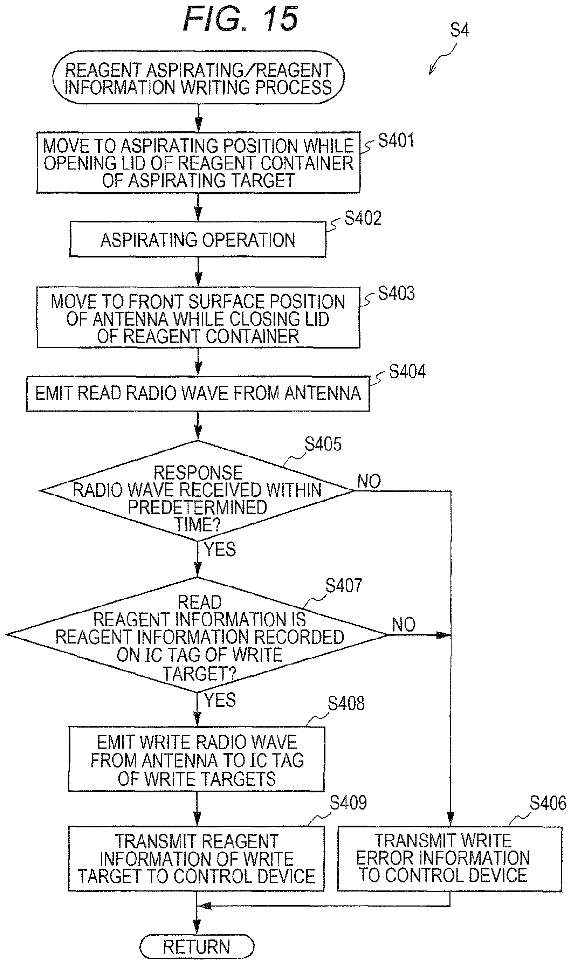

The reagent aspirating/reagent information writing process of the sample analyzer 1 according to the first embodiment of the present invention shown in step S4 of Fig. 13 is described in detail below with reference to Fig. 6 and Fig. 15.

First, in step S401, the R1/R3 installing portion 18 (R2 installing portion 19) is rotated in the direction of the arrow C1 (D1) or the direction of the arrow C2 (D2) (se e Fig. 6) so that the reagent container to be aspirated is positioned at the reagent aspirating position. In this case, the lid of the reagent container is opened with the rotation of the R1/R3 installing portion 18 (R2 installing portion 19).

In step S402, the reagent is aspirated. Thereafter, in step S403, the R1/R3 installing portion 18 (R2 installing portion 19) is rotated in the direction of the arrow C1 (D1) or the direction of the arrow C2 (D2) so that the IC tag 24 (IC tag 25) of write target is positioned at the position facing the surface 120a on the side in the direction of the arrow X1 (surface 320a on the side in the direction of the arrow X2) of the antenna 20 by the CPU 2a. In this case, the lid of the reagent container is closed with the rotation of the R1/R3 installing portion 18 (R2 installing portion 19).

In step S404, the read radio wave is emitted from the antenna 20 to the IC tag 24 (IC tag 25) of write target by the CPU 2a. Then, in step S405, whether the antenna 20 received the response radio wave within a predetermined time is determined by the CPU 2a. If it is determined that the antenna 20 did not receive the response radio wave within a predetermined time, the reading error information is transmitted to the control device 4 and a notification that the reagent information is not written to the IC tag of the write target is displayed on the display unit 4b of the control device 4 by the CPU 2a in step S406. The reagent aspirating / reagent information writing process is then terminated, and the process proceeds to step S5 shown in Fig. 13.

If it is determined that the antenna 20 received the response radio wave within a predetermined time in step S405, whether the reagent information contained in the response radio wave received by the antenna 20 is the reagent information recorded in the IC tag of the write target is determined by the CPU 2a in step S407. In this case, the CPU 2a determines whether the reagent information recorded in the IC tag of the write target based on the reagent type (type specifying information) obtained from the response radio wave. If it is determined that the reagent information contained in the response radio wave is not the reagent information recorded in the IC tag of the write target, the process proceeds to step S406.

If it is determined that the reagent information contained in the response radio wave is the reagent information recorded in the IC tag of the write target, the write radio wave including the remaining amount information and the like of the reagent is transmitted from the antenna 20 to the IC tag 24 (IC tag 25) of the write target in step S408. In step S409, the information same as the reagent information written on the IC tag is transmitted to the control device 4, and then the reagent aspirating / reagent information writing process is terminated, and the process proceeds to step S5 shown in Fig. 13. In the control device 4, the reagent information of the storage unit 4d is updated based on the reagent information received from the CPU 2a.

In the first embodiment, the read and write of the IC tag 24 of the R1 reagent container 21 arranged in the R1/R3 installing portion 18 are carried out, and the read and write of the IC tag 25 of the R2 reagent container 23 arranged in the R2 installing portion 19 are carried out with one antenna 20. The antenna 20 thus does not need to be individually arranged with respect to each of the R1/R3 installing portion 18 and the R2 installing portion 19, and hence the number of components can be suppressed from increasing. Furthermore, only the region between the R1/R3 installing portion 18 and the R2 installing portion 19 needs to be ensured to arrange the antenna 20 by arranging the antenna 20 between the R1/R3 installing portion 18 and the R2 installing portion 19, and thus two regions do not need to be ensured to arrange the antenna 20. The main body of the sample analyzer 1 thus can be suppressed from enlarging by such an amount.

In the first embodiment, the antenna 20 is arranged so as to be sandwiched by the R1/R3 installing portion 18 formed to a substantially circular ring shape and the R2 installing portion 19 formed to a substantially circular ring shape in plan view. Thus, the R2 reagent container 23 is not positioned between the R1 reagent container 21 and the antenna 20, and the R1 reagent container 21 is not positioned between the R2 reagent container 23 and the antenna 20. Therefore, the reading of the reagent information of the IC tags 24 and 25 can be suppressed from being inhibited due to the positioning of the R2 reagent container 23 between the R1 reagent container 21 and the antenna 20 and the positioning of the R1 reagent container 21 between the R2 reagent container 23 and the antenna 20.

In the first embodiment, the IC tag 24 of the R1 reagent container 21 is attached to the side surface on the side in the direction of the arrow X2 of the reagent accommodating portion 21b of the R1 reagent container 21 so as to face (oppose) at the front surface position of the surface 120a on the side in the direction of the arrow X1 of the antenna substrate 20a, and the IC tag 25 of the R2 reagent container 23 is attached to the side surface on the side in the direction of the arrow X1 of the reagent accommodating portion 23b of the R2 reagent container 23 so as to face (oppose) at the front surface position of the surface 320a on the side in the direction of the arrow X2 of the antenna substrate 20a. Both the IC tag 24 of the R1 reagent container 21 and the IC tag 25 of the R2 reagent container 23 thus can be positioned to face the antenna 20, whereby the antenna 20 can easily read the IC tags 24 and 25.

In the first embodiment, the CPU 2a is configured to determine whether the reagent information contained in the response radio wave received by the antenna 20 is the reagent information of the read target based on the reagent type (type specifying information) contained in the response radio wave, as described above. The response radio wave from the IC tag 24 or the IC tag 25 that is not the read target is thus suppressed from being mistakenly used as the response radio wave of the read target.

Furthermore, in the first embodiment, the reader/writer substrate 17a for obtaining the reagent information from the response radio wave emitted from the IC tags 24 and 25 in response to the read radio wave and the write radio wave, and received by the antenna 20 is arranged. Thus, the reagent of the R1 reagent container 21, the reagent of the R3 reagent container 22, and the reagent of the R2 reagent container 23 can be individually managed based on the reagent information of the IC tags 24 and 25 obtained by the reader/writer substrate 17a.

Still further, in the first embodiment, the write radio wave including the reagent information to be updated is transmitted from the antenna 20 to the IC tag 24 (IC tag 25) of the write target when determined that the reagent information contained in the response radio wave is the reagent information of the read target. The CPU 2a thus can determine whether communicable with the IC tag 24 (IC tag 25) of the write target in advance before writing the reagent information to the IC tag 24 (IC tag 25) of the write target. The reagent information then can be more reliably written to the IC tag 24 (IC tag 25) of the write target.

In the first embodiment, the R1/R3 installing portion 18 is rotated in the direction of the arrow C1 or the direction of the arrow C2 by the inner side rotation drive portion 16c so that the IC tag 24 of the read target is positioned at the front surface position (opposing position) facing the surface 120a on the side in the direction of the arrow X2 of the antenna 20 when reading the reagent information of the IC tag 24 of the R1 reagent container 21, and the R2 installing portion 19 is rotated in the direction of the arrow D1 or the direction of the arrow D2 by the outer side rotation drive portion 16d so that the IC tag 25 of the read target is positioned at the position facing the surface 320a on the side in the direction of the arrow X2 of the antenna 20 when reading the reagent information of the IC tag 25 of the R2 reagent container 23. Thus, the IC tags 24 and 25 of the read target can be positioned at the position facing the surface 120a on the side in the direction of the arrow X1 and the position facing the surface 320a on the side in the direction of the arrow X2 of the antenna substrate 20a, respectively, whereby the antenna 20 can easily read the IC tags 24 and 25 of the read target.

In the first embodiment, the twenty-five R1 reagent containers 21 are arranged at equal angle (about 14.4 degrees) in the substantially circular ring shaped R1/R3 installing portion 18, and the twenty-five R2 reagent containers 23 are arranged at equal angle (about 14.4 degrees) in the substantially circular ring shaped R2 installing portion 19 arranged on the outer peripheral side of the R1/R3 installing portion 18. The metal plate 20c is arranged only on the side in the direction of the arrow X1 of the antenna 20, and the metal plate is not arranged on the side in the direction of the arrow X2 of the antenna 20. Thus, the length of the outer periphery of the R1/R3 installing portion 18 formed to a substantially circular ring shape on the inner peripheral side of the R2 installing portion 19 is smaller than the length of the inner periphery of the R2 installing portion 19, and thus the reading range of the antenna 20 can be limited to the range where only the IC tag 24 of the read target is positioned when reading the IC tag 24 proximate to each other by arranging the metal plate 20c on the side in the direction of the arrow X1 of the antenna 20 when the plurality of R1 reagent containers 21 are arranged proximate to each other than the plurality of R2 reagent containers 23, whereby the IC tag 24 that is not the read target can be easily suppressed from being mistakenly read by the antenna 20. On the R2 installing portion 19 side where the space between the adjacent R2 reagent containers 23 is wide, the readable range of the antenna 20 can be easily made large by not arranging the metal plate on the side on the direction of the arrow X2 of the antenna 20, and thus the reading of the reagent information from the IC tag 25 attached to the R2 reagent container 23 can be suppressed from failing.

The first embodiment disclosed herein is merely illustrative in all aspects and should not be recognized as being restrictive. The scope of the invention is defined by the appended claims rather than by the description of the embodiments, and all changes that fall within meets and bounds of the claims, or equivalence of such meets and bounds are therefore intended to be embraced by the claims.

For instance, an example of applying the sample analyzer of the present invention to an immune sample analyzer 1 has been described in the above first embodiment, but the present invention is not limited thereto. The present invention can be applied to any apparatus including the antenna used to read the reagent information of the electronic tag, and is also applicable to a blood coagulation analyzer, a urine specimen measurement device, a gene amplification detection device and the like other than the immune sample analyzer.

An example in which the R1/R3 installing portion 18 and the R2 installing portion 19 are arranged in a substantially circular ring shape has been described in the above embodiment, but the present invention is not limited thereto. The R1/R3 installing portion and the R2 installing portion may be arranged to extend linearly in a predetermined direction while being lined in parallel.

An example in which the R1/R3 installing portion 18 and the R2 installing portion 19 are rotated by the inner side rotation drive portion 16c and the outer side rotation drive portion 16d, respectively, has been described in the above first embodiment, but the present invention is not limited thereto. The R1/R3 installing portion and the R2 installing portion may be configured so as not to rotate, and the antenna may be configured to rotate by arranging a drive portion for rotating the antenna.

An example in which the antenna substrate 20a can emit the read radio wave and the write radio wave has been described in the above first embodiment, but the present invention is not limited thereto. The antenna may be configured to emit only the read radio wave.

An example in which the metal plate 20c is arranged on the side in the direction of the arrow X1 of the antenna 20 has been described in the above first embodiment, but the present invention is not limited thereto. The metal plate may be arranged on the side in the direction of the arrow X2 of the antenna. Also, the metal plate may not be arranged at the antenna.

An example in which the control regarding the position of the IC tag 25 (IC tag 24) that is not the read target is not performed when the IC tag 24 (IC tag 25) of the read target is positioned at a position facing the surface 120a on the side in the direction of the arrow X1 (surface 320a on the side in the direction of the arrow X2) of the antenna 20 has been described, but the present invention is not limited thereto. The R2 reagent container (R1 reagent container) that is not the read target may be moved when the IC tag of the R1 reagent container (R2 reagent container) of the read target is positioned at the position facing the surface of the antenna to move to the position where the IC tag of the R2 reagent container (R1 reagent container) that is not the read target is not read. Thus, only the IC tag of the read target can be reliably read. The IC tag of the R1 reagent container of the read target and the IC tag of the R2 reagent container of the read target may be simultaneously read in parallel with the IC tag of the R1 reagent container of the read target and the IC tag of the R2 reagent container of the read target positioned at the position facing one surface and the other surface of the antenna, respectively. A plurality of IC tags thus can be read in a short period of time.

In the above described first embodiment, the IC tag 24 is attached to the side surface on the side in the direction of the arrow X2 of the reagent accommodating portion 21b of the R1 reagent container 21 so as to face at the front surface position of the surface 120a on the side in the direction of the arrow X1 of the antenna substrate 20a. An example in which the IC tag 25 is attached to the side surface on the side in the direction of the arrow X1 of the reagent accommodating portion 23b of the R2 reagent container 23 so as to face the front surface position of the surface 320a on the side in the direction of the arrow X2 of the antenna substrate 20a has been described, but the present invention is not limited thereto. The IC tag may be attached to the side surface that does not face the antenna of the reagent accommodating portion as long as the IC tag can be read by the antenna.

An example in which the writing process to the IC tags 24 and 25 is performed after the reagent aspirating operation has been described in the above first embodiment, but the present invention is not limited thereto. The writing process to the IC tags may be performed before the reagent aspirating operation.

An example in which twenty-five R1 reagent containers 21, twenty-five R3 reagent containers 22, and twenty-five R2 reagent containers 23 are arranged has been described in the first embodiment, but the present invention is not limited thereto. The number of the R1 reagent container, the R3 reagent container, and the R2 reagent container may differ. The number of R1 reagent container (R3 reagent container, R2 reagent container) may be other than twenty-five. For instance, only one of each of the R1 reagent container, the R3 reagent container, and the R2 reagent container may be arranged.

An example in which the metal plate 20c is arranged only on the side in the direction of the arrow X1 of the antenna 20 and the metal plate is not arranged on the side in the direction of the arrow X2 of the antenna 20 to differ the reading range by the antenna when reading the reagent information from the IC tag of the R1 reagent container and when reading the reagent information from the IC tag of the R2 reagent container, has been described in the above first embodiment, but the present invention is not limited thereto. For instance, the metal plate may be arranged on both the side in the direction of the arrow X1 and the side in the direction of the arrow X2 of the antenna, and the width of the cutout of the metal plate on the side in the direction of the arrow X1 may be formed smaller than the width of the cutout of the metal plate on the side in the direction of the arrow X2 to differ the reading range by the antenna. The CPU 2a may control the antenna substrate 20a through the reader/writer substrate 17a to emit a radio wave (radio wave of first reaching range) of large reading range (reaching range) when reading the reagent information from the IC tag 25 of the R2 reagent container 23, and the CPU 2a may control the antenna substrate 20a through the reader/writer substrate 17a to emit a radio wave (radio wave of second reaching range smaller than the first reaching range) of small reading range (reaching range) when reading the reagent information from the IC tag 24 of the R1 reagent container 2 1. With such a configuration, the readable range when reading the IC tag 24 can be easily made smaller than the readable range when reading the IC tag 25 by the CPU 2a.

## Claims

1. A sample analyzer for analyzing a sample by using a reagent contained in a reagent container, comprising:
a reagent installing unit (16) comprising:
a first reagent container holder (19) configured to hold a first reagent container (23) containing a first reagent, wherein a first electronic tag (25), on which a reagent information regarding the first reagent is recorded, is attached to the first reagent container (23);
a second reagent container holder (18) configured to hold a second reagent container (21) containing a second reagent, wherein a second electronic tag (24), on which a reagent information regarding the second reagent is recorded, is attached to the second reagent container (21); and
an antenna (20); and
a reagent information obtainer unit (17) configured to obtain the reagent information recorded on the first electronic tag (25) based on a radio wave received from the first electronic tag (25), and to obtain the reagent information recorded on the second electronic tag (24) based on a radio wave received from the second electronic tag (24),
**characterised in that** the antenna (20) is arranged between the first reagent container holder (19) and the second reagent container holder (18) in a plan view of the reagent installing unit (16), and is configured to receive a radio wave from each of the first and second electronic tags (25, 24).

2. The sample analyzer according to claim 1, wherein
the first electronic tag (25) is attached to a side surface of the first reagent container (23) facing the antenna (20); and
the second electronic tag (24) is attached to a side surface of the second reagent container (21) facing the antenna (20).

3. The sample analyzer according to claim 1 or 2, further comprising a controller (2a) configured to determine whether the antenna (20) has received the radio wave from an electronic tag which is a target of reading a reagent information.

4. The sample analyzer according to claim 3, wherein
the first reagent information recorded on the first electronic tag (25) contains a type specifying information for specifying a type of the first reagent, and the second reagent information recorded on the second electronic tag (24) contains a type specifying information for specifying a type of the second reagent; and
the controller (2a) is configured to determine whether the antenna (20) has received the radio wave from the electronic tag which is the target of reading the reagent information, based on a type specifying information contained in the reagent information obtained by the reagent information obtainer unit (17).

5. The sample analyzer according to any one of claims 1 to 4, wherein
the antenna (20) is configured to write a reagent information to each of the first and second electronic tags (25, 24) by emitting a write radio wave to each of the first and second electronic tags; and
the sample analyzer further comprises a controller (2a) configured to determine whether the antenna (20) and an electronic tag which is a target of writing a reagent information are communicable before the antenna (20) emits the write radio wave to the electronic tag which is the target of writing the reagent information.

6. The sample analyzer according to any one of claims 1 to 5, wherein
the antenna (20) comprises an antenna substrate (20a) having a flat plate shape, with a first surface and a second surface of the antenna substrate (20a) are positioned on the first reagent container side and the second reagent container side, respectively; and
the sample analyzer further comprises:
a drive unit (16d, 16e) configured to move at least one of the reagent container holders (18, 19) and the antenna (20); and
a controller (2a) configured to control the drive unit (16d, 16e) to position the first electronic tag (25) at a position facing the first surface of the antenna substrate (20a) when the first electronic tag (25) is a target of reading a reagent information, and control the drive unit (16d, 16e) to position the second electronic tag (24) at a position facing the second surface of the antenna substrate (20a) when the second electronic tag (24) is a target of reading a reagent information.

7. The sample analyzer according to any one of claims 1 to 6, wherein
the first reagent container holder (19) holds a plurality of first reagent containers (23), and is formed to a substantially circular shape in plan view;
the second reagent container holder (18) holds a plurality of second reagent containers (21), and is formed to a substantially circular shape on an inner peripheral side of the first reagent container holder (19) in plan view; and
a readable range by the antenna (20) when reading the second electronic tag (24) is smaller than a readable range by the antenna (20) when reading the first electronic tag (25).

8. The sample analyzer according to claim 7, further comprising a read limiting member (20c), arranged between the second electronic tag (24) and the antenna (20), for limiting the readable range by the antenna (20).

9. The sample analyzer according to claim 8, wherein
the read limiting member (20c) includes a metal member with a gap (20h) for passing the radio wave from each of the first and second electronic tags (25, 24).

10. The sample analyzer according to claim 8 or 9, wherein a read limiting member for limiting a readable range by the antenna (20) is not arranged between the first electronic tag (25) and the antenna (20).

11. The sample analyzer according to any one of claims 7 to 10, wherein the antenna (20) is configured to emit a radio wave to each of the first and second electronic tags (25, 24), and to receive a radio wave emitted from each of the first and second electronic tags (25, 24) in response to the radio wave; and
the sample analyzer further comprises a controller (2a) configured to control the antenna (20) to emit a radio wave of a first reaching range to the first electronic tag (25) when reading the reagent information from the first electronic tag (25), and emit a radio wave of a second reaching range smaller than the first reaching range when reaching the reagent information from the second electronic tag (24).

12. The sample analyzer according to any one of claims 7 to 11, wherein the first reagent container holder (19) is configured to hold a predetermined number of first reagent containers (23) at equal intervals; and
the second reagent container holder (18) is configured to hold a predetermined number of second reagent containers (21) at equal intervals.

13. The sample analyzer according to any one of claims 7 to 12, wherein
the antenna (20) is fixed at a predetermined position between the first reagent container holder (19) and the second reagent container holder (18); and
the sample analyzer further comprises:
a drive unit (16d, 16e) configured to rotationally drive the first and second reagent container holders (19, 18) in a peripheral direction; and
a controller (2a) configured to control the drive unit (16d, 16e) to move a first electronic tag (25) to a position facing the antenna (20) when the first electronic tag (25) is a target of reading a reagent information, and to move a second electronic tag (24) to a position facing the antenna (20) when the second electronic tag (24) is a target of reading a reagent information.

14. A method for obtaining reagent information of a reagent in a reagent container, comprising:
arranging an antenna (20) between a first reagent container holder (19) configured to hold a first reagent container (23) and a second reagent container holder (18) configured to hold a second reagent container (21), the antenna (20) being arranged between the first reagent container holder (19) and the second reagent container holder (18) in a plan view of a reagent installing unit (16) comprising said first reagent container holder (19), second reagent container holder (18) and antenna (20), wherein a first electronic tag (25) on which a reagent information is recorded is attached to the first reagent container (23) and a second electronic tag (24) on which a reagent information is recorded is attached to the second reagent container (21);
moving the first reagent container holder (19) so that the first electronic tag (25) faces the antenna (20) when the first electronic tag (25) is a target of reading a reagent information;
moving the second reagent container holder (18) so that the second electronic tag (24) faces the antenna (20) when the second electronic tag (24) is a target of reading a reagent information;
receiving a radio wave, by the antenna (20), from an electronic tag facing the antenna; and
obtaining a reagent information based on the radio wave received by the antenna (20).

15. The method according to claim 14, further comprising
determining whether the antenna (20) has received the radio wave from the electronic tag which is the target of reading the reagent information.

## Patentansprüche

1. Probenanalysegerät zum Analysieren einer Probe unter Verwendung eines in einem Reagenzbehälter enthaltenen Reagenzes, umfassend:
eine Reagenz-Installationseinheit (16), umfassend:
einen ersten Reagenzbehälterhalter (19), der konfiguriert ist, um einen ersten Reagenzbehälter (23), der ein erstes Reagenz enthält, zu halten, wobei eine erste elektronische Markierung (25), auf der eine Reagenzinformation bezüglich des ersten Reagenzes aufgezeichnet ist, an dem ersten Reagenzbehälter (23) angebracht ist;
einen zweiten Reagenzbehälterhalter (18), der konfiguriert ist, einen zweiten Reagenzbehälter (21), der ein zweites Reagenz enthält, zu halten, wobei eine zweite elektronische Markierung (24), auf der eine Reagenzinformation bezüglich des zweiten Reagenzes aufgezeichnet ist, an dem zweiten Reagenzbehälter (21) angebracht ist; und
eine Antenne (20); und
eine Reagenzinformations-Beschaffungseinheit (17), die konfiguriert ist, um die auf der ersten elektronischen Markierung (25) aufgezeichneten Reagenzinformationen auf der Grundlage einer von der ersten elektronischen Markierung (25) empfangenen Funkwelle zu beschaffen, und die auf der zweiten elektronischen Markierung (24) aufgezeichneten Reagenzinformationen auf der Grundlage einer von der zweiten elektronischen Markierung (24) empfangenen Funkwelle zu beschaffen,
**dadurch gekennzeichnet, dass** die Antenne (20) zwischen dem ersten Reagenzbehälterhalter (19) und dem zweiten Reagenzbehälterhalter (18) in einer Draufsicht auf die Reagenz-Installationseinheit (16) angeordnet ist und konfiguriert ist, um eine Funkwelle von jeder der ersten und zweiten elektronischen Markierungen (25, 24) zu empfangen.

2. Probenanalysegerät nach Anspruch 1, wobei
die erste elektronische Markierung (25) an einer Seitenfläche des ersten Reagenzbehälters (23) angebracht ist, die der Antenne (20) zugewandt ist; und
die zweite elektronische Markierung (24) an einer Seitenfläche des zweiten Reagenzbehälters (21) angebracht ist, die der Antenne (20) zugewandt ist.

3. Probenanalysegerät nach Anspruch 1 oder 2, weiter umfassend einen Controller (2a), der konfiguriert ist, um zu bestimmen, ob die Antenne (20) die Funkwelle von einer elektronischen Markierung empfangen hat, die ein Ziel des Lesens einer Reagenzinformation ist.

4. Probenanalysegerät nach Anspruch 3, wobei
die erste Reagenzinformation, die auf der ersten elektronischen Markierung (25) aufgezeichnet ist, eine Typ-spezifizierende Information zum Spezifizieren eines Typs des ersten Reagenzes enthält, und die zweite Reagenzinformation, die auf der zweiten elektronischen Markierung (24) aufgezeichnet ist, eine Typ-spezifizierende Information zum Spezifizieren eines Typs des zweiten Reagenzes enthält; und
der Controller (2a) konfiguriert ist, um zu bestimmen, ob die Antenne (20) die Funkwelle von der elektronischen Markierung, die das Ziel des Lesens der Reagenzinformation ist, basierend auf einer Typ-spezifizierenden Information, die in der Reagenzinformation enthalten ist, die von der Reagenzinformations-Beschaffungseinheit (17) beschafft wurde, empfangen hat.

5. Probenanalysegerät nach einem der Ansprüche 1 bis 4, wobei
die Antenne (20) konfiguriert ist, um eine Reagenzinformation auf jede der ersten und zweiten elektronischen Markierungen (25, 24) zu schreiben, indem sie eine Schreibfunkwelle zu jeder der ersten und zweiten elektronischen Markierung aussendet; und
das Probenanalysegerät weiter einen Controller (2a) umfasst, der konfiguriert ist, um zu bestimmen, ob die Antenne (20) und eine elektronische Markierung, die ein Ziel des Schreibens einer Reagenzinformation ist, kommunizierbar sind, bevor die Antenne (20) die Schreibfunkwelle zu der elektronischen Markierung ausstrahlt, die das Ziel des Schreibens der Reagenzinformation ist.

6. Probenanalysegerät nach einem der Ansprüche 1 bis 5, wobei
die Antenne (20) ein Antennensubstrat (20a) umfasst, welches eine flache Plattenform aufweist, wobei eine erste Oberfläche und eine zweite Oberfläche des Antennensubstrats (20a) jeweils auf der Seite des ersten Reagenzbehälters und der Seite des zweiten Reagenzbehälters positioniert sind; und
das Probenanalysegerät weiter umfasst:
eine Antriebseinheit (16d, 16e), die konfiguriert ist, um mindestens einen der Reagenzbehälterhalter (18, 19) und die Antenne (20) zu bewegen; und
einen Controller (2a), der konfiguriert ist, um die Antriebseinheit (16d, 16e) zu steuern, um die erste elektronische Markierung (25) an einer Position zu positionieren, die der ersten Oberfläche des Antennensubstrats (20a) zugewandt ist, wenn die erste elektronische Markierung (25) ein Ziel des Lesens einer Reagenzinformation ist, und um die Antriebseinheit (16d, 16e) zu steuern, um die zweite elektronische Markierung (24) an einer Position zu positionieren, die der zweiten Oberfläche des Antennensubstrats (20a) zugewandt ist, wenn die zweite elektronische Markierung (24) ein Ziel des Lesens einer Reagenzinformation ist.

7. Probenanalysegerät nach einem der Ansprüche 1 bis 6, wobei
der erste Reagenzbehälterhalter (19) eine Vielzahl von ersten Reagenzbehältern (23) hält und in der Draufsicht zu einer im Wesentlichen kreisförmigen Form ausgebildet ist;
der zweite Reagenzbehälterhalter (18) eine Vielzahl von zweiten Reagenzbehältern (21) hält und in der Draufsicht zu einer im Wesentlichen kreisförmigen Form auf einer inneren Umfangsseite des ersten Reagenzbehälterhalters (19) ausgebildet ist; und
ein durch die Antenne (20) lesbarer Bereich beim Lesen der zweiten elektronischen Markierung (24) kleiner als ein durch die Antenne (20) lesbarer Bereich beim Lesen der ersten elektronischen Markierung (25) ist.

8. Probenanalysegerät nach Anspruch 7, weiter umfassend ein Lesebegrenzungselement (20c), das zwischen der zweiten elektronischen Markierung (24) und der Antenne (20) angeordnet ist, um den durch die Antenne (20) lesbaren Bereich zu begrenzen.

9. Probenanalysegerät nach Anspruch 8, wobei
das Lesebegrenzungselement (20c) ein Metallelement mit einem Spalt (20h) einschließt, um die Funkwelle von jeder der ersten und zweiten elektronischen Markierungen (25, 24) durchzulassen.

10. Probenanalysegerät nach Anspruch 8 oder 9, wobei ein Lesebegrenzungselement für die Begrenzung eines durch die Antenne (20) lesbaren Bereichs nicht zwischen der ersten elektronischen Markierung (25) und der Antenne (20) angeordnet ist.

11. Probenanalysegerät nach einem der Ansprüche 7 bis 10, wobei die Antenne (20) konfiguriert ist, um eine Funkwelle zu jeder der ersten und zweiten elektronischen Markierung (25, 24) auszusenden und eine Funkwelle zu empfangen, die von jeder der ersten und zweiten elektronischen Markierung (25, 24) als Reaktion auf die Funkwelle ausgesendet wird; und
das Probenanalysegerät weiter einen Controller (2a) umfasst, der konfiguriert ist, um die Antenne (20) zu steuern, um eine Funkwelle eines ersten Reichweitenbereichs zu der ersten elektronischen Markierung (25) auszusenden, wenn sie die Reagenzinformation von der ersten elektronischen Markierung (25) liest, und eine Funkwelle eines zweiten Reichweitenbereichs auszusenden, der kleiner als der erste Reichweitenbereich ist, wenn sie die Reagenzinformation von der zweiten elektronischen Markierung (24) erreicht.

12. Probenanalysegerät nach einem der Ansprüche 7 bis 11, wobei der erste Reagenzbehälterhalter (19) konfiguriert ist, um eine vorbestimmte Anzahl von ersten Reagenzbehältern (23) in gleichen Intervallen zu halten; und
der zweite Reagenzbehälterhalter (18) konfiguriert ist, um eine vorbestimmte Anzahl von zweiten Reagenzbehältern (21) in gleichen Intervallen zu halten.

13. Probenanalysegerät nach einem der Ansprüche 7 bis 12, wobei
die Antenne (20) an einer vorbestimmten Position zwischen dem ersten Reagenzbehälterhalter (19) und den zweiten Reagenzbehälterhalter (18) befestigt ist; und
das Probenanalysegerät weiter umfasst:
eine Antriebseinheit (16d, 16e), die konfiguriert ist, um den ersten und den zweiten Reagenzbehälterhalter (19, 18) in einer Umfangsrichtung drehend anzutreiben; und
einen Controller (2a), der konfiguriert ist, um die Antriebseinheit (16d, 16e) zu steuern, um eine erste elektronische Markierung (25) in eine der Antenne (20) zugewandte Position zu bewegen, wenn die erste elektronische Markierung (25) ein Ziel zum Lesen einer Reagenzinformation ist, und um eine zweite elektronische Markierung (24) in eine der Antenne (20) zugewandte Position zu bewegen, wenn die zweite elektronische Markierung (24) ein Ziel zum Lesen einer Reagenzinformation ist.

14. Verfahren zum Beschaffen einer Reagenzinformation eines Reagenzes in einem Reagenzbehälter, umfassend:
Anordnen einer Antenne (20) zwischen einem ersten Reagenzbehälterhalter (19), der konfiguriert ist, um einen ersten Reagenzbehälter (23) zu halten, und einem zweiten Reagenzbehälterhalter (18), der konfiguriert ist, um einen zweiten Reagenzbehälter (21) zu halten, wobei die Antenne (20) zwischen dem ersten Reagenzbehälterhalter (19) und dem zweiten Reagenzbehälterhalter (18) in einer Draufsicht auf eine Reagenz-Installationseinheit (16) angeordnet ist, die den ersten Reagenzbehälterhalter (19), zweiten Reagenzbehälterhalter (18) und Antenne (20) umfasst, wobei eine erste elektronische Markierung (25), auf der eine Reagenzinformation aufgezeichnet ist, an dem ersten Reagenzbehälter (23) angebracht ist, und eine zweite elektronische Markierung (24), auf der eine Reagenzinformation aufgezeichnet ist, an dem zweiten Reagenzbehälter (21) angebracht ist;
Bewegen des ersten Reagenzbehälterhalters (19), so dass die erste elektronische Markierung (25) der Antenne (20) zugewandt ist, wenn die erste elektronische Markierung (25) ein Ziel zum Lesen einer Reagenzinformation ist;
Bewegen des zweiten Reagenzbehälterhalters (18), so dass die zweite elektronische Markierung (24) der Antenne (20) zugewandt ist, wenn die zweite elektronische Markierung (24) ein Ziel des Lesens einer Reagenzinformation ist;
Empfangen einer Funkwelle durch die Antenne (20) von einer elektronischen Markierung, die der Antenne zugewandt ist; und
Beschaffung einer Reagenzinformation auf der Grundlage der von der Antenne (20) empfangenen Funkwelle.

15. Verfahren nach Anspruch 14, weiter umfassend
Bestimmen, ob die Antenne (20) die Funkwelle der elektronischen Markierung empfangen hat, die das Ziel des Lesens der Reagenzinformation ist.

## Revendications

1. Analyseur d'échantillon pour analyser un échantillon en utilisant un réactif contenu dans un contenant de réactif, comprenant :
une unité d'installation de réactif (16) comprenant :
un premier support de contenant de réactif (19) configuré pour supporter un premier contenant de réactif (23) contenant un premier réactif, dans lequel une première étiquette électronique (25), sur laquelle une information de réactif concernant le premier réactif est enregistrée, est fixée au premier contenant de réactif (23) ;
un second support de contenant de réactif (18) configuré pour supporter un second contenant de réactif (21) contenant un second réactif, dans lequel une seconde étiquette électronique (24), sur laquelle une information de réactif concernant le second réactif est enregistrée, est fixée au second contenant de réactif (21) ; et
une antenne (20) ; et
une unité d'obtention d'information de réactif (17) configurée pour obtenir l'information de réactif enregistrée sur la première étiquette électronique (25) sur la base d'une onde radio reçue à partir de la première étiquette électronique (25), et pour obtenir l'information de réactif enregistrée sur la seconde étiquette électronique (24) sur la base d'une onde radio reçue à partir de la seconde étiquette électronique (24),
**caractérisé en ce que** l'antenne (20) est agencée entre le premier support de contenant de réactif (19) et le second support de contenant de réactif (18) dans une vue de dessus de l'unité d'installation de réactif (16), et est configurée pour recevoir une onde radio à partir de chacune des première et seconde étiquettes électroniques (25, 24).

2. Analyseur d'échantillon selon la revendication 1, dans lequel
la première étiquette électronique (25) est fixée sur une surface latérale du premier contenant de réactif (23) faisant face à l'antenne (20) ; et
la seconde étiquette électronique (24) est fixée sur une surface latérale du second contenant de réactif (21) faisant face à l'antenne (20).

3. Analyseur d'échantillon selon la revendication 1 ou 2, comprenant en outre un dispositif de commande (2a) configuré pour déterminer si l'antenne (20) a reçu l'onde radio à partir d'une étiquette électronique qui est une cible de lecture d'une information de réactif.

4. Analyseur d'échantillon selon la revendication 3, dans lequel
l'information de premier réactif enregistrée sur la première étiquette électronique (25) contient une information de spécification de type pour spécifier un type du premier réactif, et l'information de second réactif enregistrée sur la seconde étiquette électronique (24) contient une information de spécification de type pour spécifier un type du second réactif ; et
le dispositif de commande (2a) est configuré pour déterminer si l'antenne (20) a reçu l'onde radio à partir de l'étiquette électronique qui est la cible de lecture des informations de réactif, sur la base d'une information de spécification de type contenue dans l'information de réactif obtenue par l'unité d'obtention d'information de réactif (17).

5. Analyseur d'échantillon selon l'une quelconque des revendications 1 à 4, dans lequel
l'antenne (20) est configurée pour écrire une information de réactif sur chacune des première et seconde étiquettes électroniques (25, 24) en émettant une onde radio d'écriture vers chacune des première et seconde étiquettes électroniques ; et
l'analyseur d'échantillon comprend en outre un dispositif de commande (2a) configuré pour déterminer si l'antenne (20) et une étiquette électronique qui est une cible d'écriture d'une information de réactif sont susceptibles d'une communication avant que l'antenne (20) n'émette l'onde radio d'écriture vers l'étiquette électronique qui est la cible d'écriture de l'information de réactif.

6. Analyseur d'échantillon selon l'une quelconque des revendications 1 à 5, dans lequel
l'antenne (20) comprend un substrat d'antenne (20a) ayant une forme de plaque plate, avec une première surface et une seconde surface du substrat d'antenne (20a) positionnées respectivement du côté du premier contenant de réactif et du côté du second contenant de réactif ; et
l'analyseur d'échantillon comprend en outre :
une unité d'entraînement (16d, 16e) configurée pour déplacer au moins l'un des supports de contenant de réactif (18, 19) et l'antenne (20) ; et
un dispositif de commande (2a) configuré pour commander l'unité d'entraînement (16d, 16e) afin de positionner la première étiquette électronique (25) dans une position faisant face à la première surface du substrat d'antenne (20a) lorsque la première étiquette électronique (25) est une cible de lecture d'une information de réactif, et de commander l'unité d'entraînement (16d, 16e) pour positionner la seconde étiquette électronique (24) dans une position faisant face à la seconde surface du substrat d'antenne (20a) lorsque la seconde étiquette électronique (24) est une cible de lecture d'une information de réactif.

7. Analyseur d'échantillon selon l'une quelconque des revendications 1 à 6, dans lequel
le premier support de contenant de réactif (19) contient une pluralité de premiers contenants de réactif (23), et est formé en une forme sensiblement circulaire en vue de dessus ;
le second support de contenant de réactif (18) contient une pluralité de seconds contenants de réactif (21), et est formé en une forme sensiblement circulaire sur un côté périphérique interne du premier support de contenant de réactif (19) en vue de dessus ; et
une portée de lecture par l'antenne (20) lors d'une lecture de la seconde étiquette électronique (24) est inférieure à une portée de lecture par l'antenne (20) lors d'une lecture de la première étiquette électronique (25).

8. Analyseur d'échantillon selon la revendication 7, comprenant en outre un élément de limitation de lecture (20c), agencé entre la seconde étiquette électronique (24) et l'antenne (20), pour limiter la portée de lecture par l'antenne (20).

9. Analyseur d'échantillon selon la revendication 8, dans lequel
l'élément de limitation de lecture (20c) inclut un élément métallique avec un espace (20h) pour un passage de l'onde radio à partir de chacune des première et seconde étiquettes électroniques (25, 24).

10. Analyseur d'échantillon selon la revendication 8 ou 9, dans lequel un élément de limitation de lecture pour limiter une portée de lecture par l'antenne (20) n'est pas agencé entre la première étiquette électronique (25) et l'antenne (20).

11. Analyseur d'échantillon selon l'une quelconque des revendications 7 à 10, dans lequel l'antenne (20) est configurée pour émettre une onde radio vers chacune des première et seconde étiquettes électroniques (25, 24), et pour recevoir une onde radio émise à partir de chacune des première et seconde étiquettes électroniques (25, 24) en réponse à l'onde radio ; et
l'analyseur d'échantillon comprend en outre un dispositif de commande (2a) configuré pour commander l'antenne (20) afin d'émettre une onde radio d'une première portée d'atteinte vers la première étiquette électronique (25) lors d'une lecture de l'information de réactif à partir de la première étiquette électronique (25), et émettre une onde radio d'une seconde portée d'atteinte inférieure à la première portée d'atteinte lors de l'atteinte de l'information de réactif à partir de la seconde étiquette électronique (24).

12. Analyseur d'échantillon selon l'une quelconque des revendications 7 à 11, dans lequel le premier support de contenant de réactif (19) est configuré pour contenir un nombre prédéterminé de premiers contenants de réactif (23) à des intervalles égaux ; et
le second support de contenant de réactif (18) est configuré pour contenir un nombre prédéterminé de seconds contenants de réactif (21) à des intervalles égaux.

13. Analyseur d'échantillon selon l'une quelconque des revendications 7 à 12, dans lequel
l'antenne (20) est fixée dans une position prédéterminée entre le premier support de contenant de réactif (19) et le second support de contenant de réactif (18) ; et
l'analyseur d'échantillon comprend en outre :
une unité d'entraînement (16d, 16e) configurée pour entraîner en rotation les premier et second supports de contenant de réactif (19, 18) dans une direction périphérique ; et
un dispositif de commande (2a) configuré pour commander l'unité d'entraînement (16d, 16e) afin de déplacer une première étiquette électronique (25) vers une position faisant face à l'antenne (20) lorsque la première étiquette électronique (25) est une cible de lecture d'une information de réactif, et de déplacer une seconde étiquette électronique (24) vers une position faisant face à l'antenne (20) lorsque la seconde étiquette électronique (24) est une cible de lecture d'une information de réactif.

14. Procédé pour obtenir une information de réactif d'un réactif dans un contenant de réactif, comprenant les étapes consistant à :
agencer une antenne (20) entre un premier support de contenant de réactif (19) configuré pour supporter un premier contenant de réactif (23) et un second support de contenant de réactif (18) configuré pour supporter un second contenant de réactif (21), l'antenne (20) étant agencée entre le premier support de contenant de réactif (19) et le second support de contenant de réactif (18) dans une vue de dessus d'une unité d'installation de réactif (16) comprenant ledit premier support de contenant de réactif (19), ledit second support de contenant de réactif (18) et ladite antenne (20), dans lequel une première étiquette électronique (25) sur laquelle une information de réactif est enregistrée est fixée au premier contenant de réactif (23) et une seconde étiquette électronique (24) sur laquelle une information de réactif est enregistrée est fixée au second contenant de réactif (21) ;
déplacer le premier support de contenant de réactif (19) de sorte que la première étiquette électronique (25) soit face à l'antenne (20) lorsque la première étiquette électronique (25) est une cible de lecture d'une information de réactif ;
déplacer le second support de contenant de réactif (18) de sorte que la seconde étiquette électronique (24) soit face à l'antenne (20) lorsque la seconde étiquette électronique (24) est une cible de lecture d'une information de réactif ;
recevoir une onde radio, par l'intermédiaire de l'antenne (20), à partir d'une étiquette électronique faisant face à l'antenne ; et
obtenir une information de réactif sur la base de l'onde radio reçue par l'intermédiaire de l'antenne (20).

15. Procédé selon la revendication 14, comprenant en outre l'étape consistant à
déterminer si l'antenne (20) a reçu l'onde radio à partir de l'étiquette électronique qui est la cible de lecture de l'information de réactif.
